# FASCICULE DE BREVET EUROPEEN

(11) **EP 2 075 416 B1**
(45) Date de publication et mention de la délivrance du brevet: **18.05.2011**
(21) Numéro de dépôt: 07150429.4
(22) Date de dépôt: 27.12.2007
(51) Int. Cl.: F01D 9/04, F01D 11/12

(54) **Procédé de fabrication d'un élément de turbomachine et dispositif ainsi obtenu**
Verfahren zur Herstellung eines Teils einer Strömungsmaschine und so erhaltene Vorrichtung
Method for manufacturing a turboshaft engine element and device obtained using same

(43) Date de publication de la demande: 01.07.2009
(73) Titulaire: Techspace Aero, 4041 Milmort - Herstal (BE)
(72) Inventeur: Derclaye, Alain, 4218, Couthuin (BE); Lebrun, Rodolphe, 5000, Namur (BE)
(74) Mandataire: Barbin le Bourhis, Joël

(56) Documents cités:
- EP-A- 0 602 631
- GB-A- 2 207 629
- GB-A- 2 388 161
- US-A- 3 070 353
- US-A- 5 429 478
- US-A1- 2004 086 635

## Description

L'invention se rapporte à un procédé de fabrication d'un élément de turbomachine et plus particulièrement un sous-ensemble comprenant une virole extérieure portant un étage d'aubes statoriques et une piste annulaire de matériau abradable en regard de laquelle se déplacent les extrémités des aubes mobiles d'un étage de rotor. L'invention concerne plus particulièrement un perfectionnement permettant tout à la fois de simplifier la formation de la piste de matériau abradable et de réduire l'encombrement axial et le poids de l'élément, dans son ensemble.

Un étage de turbomachine, comme par exemple un étage de compression dans un compresseur est agencé entre une virole extérieure et une virole intérieure, coaxiales. Les aubes fixes statoriques s'étendent entre les deux viroles. Les aubes mobiles sont entraînées en rotation à l'intérieur de la virole extérieure en sorte que les extrémités de ces aubes se déplacent en regard d'une piste de matériau abradable déposé sur la surface interne de la virole extérieure, en amont des aubes statoriques.

Dans la suite de la description les termes "amont" et "aval" permettent de situer les éléments de structure les uns par rapport aux autres en prenant pour référence le sens d'écoulement du fluide dans la veine, c'est-à-dire à l'intérieur de la virole extérieure. Le Document GB-A-2388161 décrit un sous-ensemble constitué par une virole extérieure, une piste de matériau abradable et des aubes statoriques munies de plateformes indissociablement venues de moulage avec des tronçons de la virole.

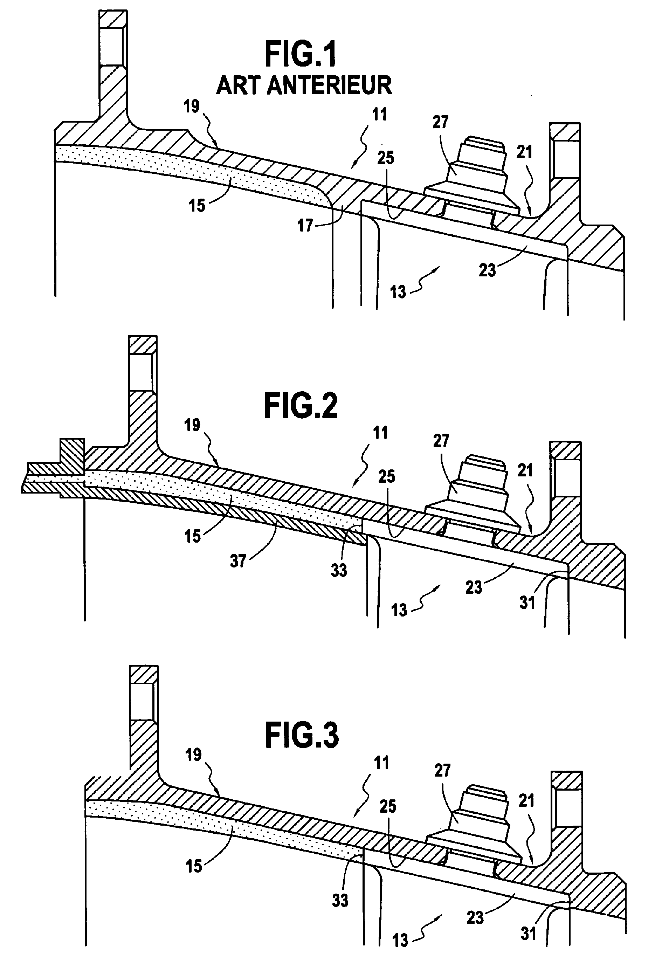

La figure 1 représente un sous-ensemble connu constitué par la virole extérieure 11, les aubes statoriques 13 et la piste de matériau abradable 15. Selon cet agencement, la virole extérieure 11 présente une nervure interne 17 qui sépare une partie amont 19 où se trouve la piste de matériau abradable 15 d'une partie aval 21 où sont montées les aubes statoriques 13. Chaque aube présente une plateforme 23 encastrée dans une gorge annulaire 25 de la virole extérieure. La nervure 17 forme le bord amont de cette gorge. Dans l'exemple décrit, les aubes 13 fixes sont assemblées à la virole extérieure 11 par des boulons 27. La forme finale de la virole extérieure, du côté interne, est généralement obtenue par usinage. La virole est généralement métallique, par exemple en alliage d'aluminium, de titane ou d'acier. Le matériau abradable est souvent un mélange d'aluminium et de résine déposé à chaud (plasma) ou à froid, ou un silicone "RTV".

L'un des objectifs de l'invention est de simplifier la virole extérieure 11 et notamment de supprimer la nervure 17.

L'idée de base de l'invention consiste à utiliser les plateformes des aubes statoriques pour constituer une partie des moyens de confinement permettant la mise en place du matériau abradable sur la face interne de la virole.

Plus particulièrement, l'invention concerne un procédé de fabrication d'un élément de turbomachine comportant une virole extérieure comprenant une première partie pourvue intérieurement d'une piste de matériau abradable et une seconde partie à laquelle sont rapportées des aubes statoriques munies de plateformes distinctes de ladite virole extérieure, tel qu'on assemble les aubes statoriques à la virole de façon que lesdites plateformes définissent un champ annulaire sensiblement continu à l'intérieur de ladite virole extérieure et en ce qu'on dépose le matériau abradable à l'intérieur de ladite première partie en utilisant ce champ pour délimiter un bord de ladite piste de matériau abradable.

Dans l'exemple, ladite première partie est à l'amont et ladite seconde partie est à l'aval.

On peut ainsi diminuer la longueur de la virole extérieure puisque la nervure 17 est supprimée. L'invention permet aussi de fabriquer la virole extérieure en matériau composite à base de fibres de carbone ou de verre car on peut obtenir une épaisseur de voile pratiquement constante sur la plus grande partie de la longueur de la virole.

Selon une caractéristique avantageuse, le matériau abradable est injecté à cotes finies. Ce type d'injection est connu en soi et permet d'éviter tout usinage ultérieur.

Par exemple, le matériau abradable est un composé à base de silicone. Dans ces conditions, le matériau peut être en contact avec les bords des plateformes des aubes statoriques. Il n'est pas nécessaire de prévoir un jeu entre la piste de matériau abradable et les plateformes. Au contraire, les vibrations peuvent être amorties par le silicone.

Bien entendu, l'invention n'exclut pas de déposer un autre type de matériau abradable (déposition par plasma à chaud) voire un matériau à base de silicone injecté à cotes non finies.

L'invention concerne également un élément de turbomachine comportant une virole extérieure comprenant une partie amont pourvue intérieurement d'une piste de matériau abradable et une partie aval à laquelle sont rapportées des aubes statoriques munies de plateformes distinctes de ladite virole extérieure, tel que le bord aval de ladite piste de matériau abradable jouxte l'ensemble des bords amont desdites plateformes d'aubes statoriques.

Comme mentionné précédemment, la virole extérieure peut avantageusement être en matériau composite à base de fibres de carbone ou de verre.

L'invention vise également toute turbomachine comprenant au moins un élément selon la définition qui précède. Elle s'applique notamment à un compresseur basse pression d'un turboréacteur.

L'invention sera mieux comprise et d'autres avantages de celle-ci apparaîtront plus clairement à la lumière de la description qui va suivre donnée uniquement à titre d'exemples et faite en référence aux dessins annexés, dans lesquels :
- la figure 1 est une vue en coupe axiale partielle d'un élément de turbomachine selon l'état de la technique ;
- la figure 2 illustre un élément de turbomachine semblable, conforme à l'invention et montre plus particulièrement une phase du procédé conforme à l'invention ; et
- la figure 3 est une vue analogue à la figure 2 illustrant l'élément de turbomachine terminé.

L'élément de turbomachine représenté sur la figure 2 constitue une partie d'un étage de compression d'un compresseur. Il se compose d'une virole extérieure 11 comprenant une partie amont 19 pourvue intérieurement d'une piste de matériau abradable 15 et une partie aval 21 à laquelle sont fixées des aubes statoriques 13.

Contrairement au dispositif connu de la figure 1, les plateformes 23 des aubes statoriques sont positionnées par contact d'un seul côté à l'intérieur de la virole 11, le long d'un seul champ aval de positionnement 31. En effet, la nervure médiane est supprimée. Le positionnement est donc plus facile. Les aubes statoriques 13 sont montées côte à côté grâce à des boulons 27. Elles définissent ainsi un champ annulaire 33 sensiblement continu, à l'amont. La présence de ce champ est mise à profit pour déposer le matériau abradable à la face interne de la partie amont 19 de la virole en utilisant ce champ pour délimiter le bord aval de la piste de matériau abradable 15. C'est ce qui est illustré à la figure 2 où l'on voit que le champ annulaire 33 formé par les plateformes 23 constitue une paroi terminale d'un moule 37 permettant d'injecter le matériau abradable. Dans cet exemple, le matériau abradable est un composé à base de silicone. L'injection du silicone se fait à cotes finies en sorte qu'aucun usinage ultérieur n'est nécessaire. Le retrait du moule 37 après injection du matériau abradable aboutit à la configuration de la figure 3. L'élément de turbomachine est terminé et peut entrer dans la constitution du compresseur, les aubes mobiles solidaires d'un rotor (non représentées) venant en regard de la piste de matériau abradable 15.

De plus, comme indiqué ci-dessus, la virole extérieure 11 dont la forme est beaucoup plus simple, avec une épaisseur de paroi pratiquement constante sur la plus grande partie de sa longueur, peut facilement être réalisée en matériau non métallique, par exemple en matériau composite à base de fibres de carbone ou de verre. L'utilisation d'un matériau abradable à base de silicone améliore l'amortissement vibratoire des plateformes.

Le procédé défini ci-dessus peut aussi s'appliquer même si l'abradable est déposé "à cotes non finies", ce qui implique un usinage de finition.

Il est aussi possible de mettre en oeuvre le procédé avec l'application d'un abradable par plasma, ce qui aboutit généralement à un dépôt d'abradable à cotes non finies.

## Revendications

1. Procédé de fabrication d'un élément de turbomachine comportant une virole extérieure (11) comprenant une première partie (19) pourvue intérieurement d'une piste de matériau abradable (15) et une seconde partie (21) à laquelle sont rapportées des aubes statoriques munies de plateformes distinctes de ladite virole extérieure, **caractérisé en ce qu'**on assemble les aubes statoriques à la virole de façon que lesdites plateformes définissent un champ annulaire (33) sensiblement continu à l'intérieur de ladite virole extérieure et **en ce qu'**on dépose le matériau abradable à l'intérieur de ladite première partie en utilisant ce champ pour délimiter un bord de ladite piste de matériau abradable.

2. Procédé selon la revendication 1, **caractérisé en ce qu'**on injecte ledit matériau abradable à cotes finies.

3. Procédé selon la revendication 1, **caractérisé en ce qu'**on dépose ledit matériau abradable à cotes non finies, avec usinage ultérieur.

4. Procédé selon la revendication 1 ou 2, **caractérisé en ce que** ledit matériau abradable est un composé à base de silicone.

5. Procédé sleon la revendication 1 ou 3, **caractérisé en ce qu'**on applique ledit abradable par projection plasma.

6. Elément de turbomachine comportant une virole extérieure (11) comprenant une partie amont (19) pourvue intérieurement d'une piste de matériau abradable (15) en contact direct de la surface interne de ladite virole et comportant une partie aval (21) à laquelle sont rapportées des aubes statoriques munies de plateformes distinctes de ladite virole extérieure, **caractérisé en ce que** le bord aval de ladite piste de matériau abradable jouxte l'ensemble des bords amont desdites plateformes d'aubes statoriques (23).

7. Elément de turbomachine selon la revendication 6, **caractérisé en ce que** ledit matériau abradable est un composé à base de silicone.

8. Elément de turbomachine selon la revendication 7, **caractérisé en ce que** ledit matériau abradable est en contact avec l'ensemble des bords amont desdites plateformes (23).

9. Elément de turbomachine selon l'une des revendications 6 à 8, **caractérisé en ce que** ladite virole extérieure (11) est en matériau composite à base de fibres de carbone ou de verre.

10. Turbomachine **caractérisée en ce qu'**elle comporte un élément selon l'une des revendications 6 à 9.

## Claims

1. Method of manufacturing a turbomachine element comprising an external annular shell (11) comprising a first portion (19) provided internally with a track of abradable material (15) and a second portion (21) to which are added stator blades provided with platforms that are distinct from said external annular shell, the method being **characterized in that** the stator blades are attached to the annular shell so that said platforms define an annular edge (33) that is substantially continuous inside said external annular shell and **in that** the abradable material is deposited inside said first portion using this edge to delimit a boundary of said track of abradable material.

2. Method according to claim 1, **characterized in that** said abradable material is injected to finite dimensions.

3. Method according to claim 1, **characterized in that** said abradable material is deposited with non-finite dimensions, with subsequent machining.

4. Method according to claim 1 or claim 2, **characterized in that** said abradable material is a silicone-based compound.

5. Method according to claim 1 or claim 3, **characterized in that** said abradable material is applied by plasma spraying.

6. Turbomachine element comprising an external annular shell (11) comprising an upstream portion (19) provided internally with a track of abradable material (15) in direct contact with the internal surface of said annular shell and comprising a downstream portion (21) to which are added stator blades that are provided with platforms that are distinct from said external annular shell, **characterized in that** the downstream boundary of said track of abradable material juxtaposes all of the upstream boundaries of said stator blade platforms (23).

7. Turbomachine element according to claim 6, **characterized in that** said abradable material is a silicone-based compound.

8. Turbomachine element according to claim 7, **characterized in that** said abradable material is in contact with all of the upstream boundaries of said platforms (23).

9. Turbomachine element according to one of claims 6 to 8, **characterized in that** said external annular shell (11) is made of carbon or glass fibre-based composite material.

10. Turbomachine **characterized in that** it comprises an element according to one of claims 6 to 9.

## Patentansprüche

1. Verfahren zur Herstellung eines Turbomaschinenelements, das einen Außenring (11) umfaßt, der einen ersten Teil (19), welcher innen mit einer Spur aus Abriebmaterial (15) versehen ist, sowie einen zweiten Teil (21) aufweist, an den Leitschaufeln, die mit von dem Außenring getrennten Plattformen ausgestattet sind, angefügt sind, **dadurch gekennzeichnet, daß** die Leitschaufeln derart mit dem Ring verbunden werden, daß die Plattformen einen im Wesentlichen durchgehenden ringförmigen Bereich (33) innerhalb des Außenrings bilden und daß das Abriebmaterial innerhalb des ersten Teils unter Verwendung dieses Bereichs zum Begrenzen einer Kante der Spur aus Abriebmaterial abgeschieden wird.

2. Verfahren nach Anspruch 1, **dadurch gekennzeichnet, daß** das Abriebmaterial mit Fertigmaß eingespritzt wird.

3. Verfahren nach Anspruch 1, **dadurch gekennzeichnet, daß** das Abriebmaterial mit nicht fertigem Maß, mit Nachbearbeitung abgeschieden wird.

4. Verfahren nach Anspruch 1 oder 2, **dadurch gekennzeichnet, daß** das Abriebmaterial eine Verbindung auf Silikonbasis ist.

5. Verfahren nach Anspruch 1 oder 3, **dadurch gekennzeichnet, daß** das Abriebmaterial mittels Plasmaspritzen aufgebracht wird.

6. Turbomaschinenelement, das einen Außenring (11) umfaßt, der einen stromaufwärtigen Teil (19) aufweist, welcher innen, in direktem Kontakt mit der Innenseite des Rings, mit einer Spur aus Abriebmaterial (15) versehen ist, sowie einen stromabwärtigen Teil (21) aufweist, an den Leitschaufeln, die mit von dem Außenring getrennten Plattformen ausgestattet sind, angefügt sind, **dadurch gekennzeichnet, daß** die stromabwärtige Kante der Spur aus Abriebmaterial an alle stromaufwärtigen Kanten der Leitschaufelplattformen (23) angrenzt.

7. Turbomaschinenelement nach Anspruch 6, **dadurch gekennzeichnet, daß** das Abriebmaterial eine Verbindung auf Silikonbasis ist.

8. Turbomaschinenelement nach Anspruch 7, **dadurch gekennzeichnet, daß** das Abriebmaterial mit allen stromaufwärtigen Kanten der Plattformen (23) in Kontakt ist.

9. Turbomaschinenelement nach einem der Ansprüche 6 bis 8, **dadurch gekennzeichnet, daß** der Außenring (11) aus einem Verbundwerkstoff auf der Basis von Kohlenstoff- oder Glasfasern ist.

10. Turbomaschine, **dadurch gekennzeichnet, daß** sie ein Element nach einem der Ansprüche 6 bis 9 umfaßt.
